(19) Europäisches Patentamt
European Patent Office
Office européen des brevets

(11) EP 1 198 137 B1

(12) **EUROPEAN PATENT SPECIFICATION**

(45) Date of publication and mention of the grant of the patent:
**26.01.2011 Bulletin 2011/04**

(51) Int Cl.:
***H04N 7/01*** *(2006.01)* ***H04N 7/26*** *(2006.01)*

(21) Application number: **00122482.3**

(22) Date of filing: **13.10.2000**

(54) **Method and apparatus for film mode detection in video fields**

Verfahren und Vorrichtung zur Film-Mode-Detektion in Videohalbbildern

Procédé et dispositif de détection de mode film dans des trames vidéo

(84) Designated Contracting States:
**DE FR GB**

(43) Date of publication of application:
**17.04.2002 Bulletin 2002/16**

(73) Proprietor: **Panasonic Corporation**
**Kadoma-shi**
**Osaka 571-8501 (JP)**

(72) Inventors:
- **Landsiedel, Thilo**
  **63110 Rodgau (DE)**
- **Wild, Arne**
  **55129 Mainz (DE)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 0 933 942** **EP-A- 0 994 626**
**WO-A-00/33579** **WO-A-00/51355**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 198 137 B1

## Description

The present invention relates to a method and an apparatus for detecting film mode in a sequence of 50Hz or 60Hz video fields.

A detection of film mode in a video sequence is particularly relevant for a further processing of said video data. Such a further processing may relate to an improved image quality of the received video sequence, to a more effective compression algorithm etc.

Video signals received by a television receiver are generally in interlaced mode. In interlaced mode, only fields are transmitted to the receiver. Each field has half the number of lines compared with a complete frame, and succeeding fields comprise alternate lines of a frame, wherein a first field generally comprises lines having an odd line number and the succeeding field comprises lines have an even line number with respect to the lines of a corresponding frame.

A television receiver receives fifty fields per second in compliance with PAL television standard and sixty fields per second in conformity with NTSC television standard. Consequently, the PAL field repetition rate is 50Hz and NTSC field repetition rate 60Hz. Such a repetition rate reduces large area flicker when compared with a 25Hz/30Hz repetition rate of frames. The PAL and NTSC repetition rates correspond to a new field every 20ms (PAL) or 16.6ms (NTSC).

When a video camera is used as a video source, movements of a filmed object result in different positions of said object in consecutive fields. A re-composition of such two fields into a single frame would result in objectionable errors, such as saw-tooth artefacts, in the reproduced picture as both fields relate to different motion phases.

Motion picture data is composed of complete frames only. Such motion picture information with a frame rate of twenty-four frames per second is converted into an interlaced video format, using a commonly known pulldown technique.

A 2-2 pulldown technique is employed in order to convert motion picture film into an interlaced PAL video signal. The 2-2 pulldown technique generates two fields out of each frame, which is repeated twice. In the 2-2 pulldown technique, two succeeding fields contain information originating from the same frame. To overcome the disparity in frequency, the film is played slightly faster at 25 instead of the original 24 frames per second.

When converting motion picture data into NTSC video signals, film data with a rate of 24 frames per second is converted into a 60 field per second video signal using a 3-2 pulldown technique. The 3-2 pulldown technique generates two video fields for a given film frame and three video fields for the next film frame.

A re-composition of succeeding fields into frames without image quality degradation is only possible if a video sequence can be reliably determined to originate from motion picture data and the video fields which correspond to a common film frame are identified. As no special information is included in video signals for indicating whether or not a field originates from motion picture data, a film mode detection is employed before a re-composition of fields is carried out. Film mode detection distinguishes whether input video signals originate from motion picture data or e.g. from a video camera.

In case the source of film conversion is an animated or computer generated scene, every pulldown mode is possible, e.g. 3-4, 4-4, 4-5 etc. It depends largely on the quality of the scene and the number of source frames available. However, there is no standard guiding such conversions. It is a beneficial feature if the film mode detection in an encoding apparatus can be set to detect virtually any pulldown.

Document EP-A2-0 720 366 describes an apparatus and method for film mode detection. The method addresses a detection of patterns representative of 2-2 pulldown and 3-2 pulldown film originated frames. A film data comparison and accumulation unit calculates differences between pixels of a current field and vertical adjacent pixels of a previous field. The calculated differences are accumulated per field. Such field difference information is evaluated in a film data reduction unit by determining changes in the field difference information signal on successive fields. The changes in the field difference are compared to expected film-generated patterns using correlation techniques. For this purpose, a delayed field difference signal is subtracted from a current field difference signal. A one-bit per field sequence formed by the sign-bit of the resulting difference signal is compared with the predetermined film-generated patterns.

A further conventional film mode detector for 50 Hz television signals is known from WO 94/30006. The described apparatus determines whether a video source is a motion picture film and identifies which two fields are from the same film frame. The described detection scheme looks for differences in motion between consecutive fields. The motion signal, consisting of ones for "motion" and zeros for "no motion", is applied to a sequence detector which looks for a "10" pattern in the motion signal. A detection of nine successive sequences of film mode pattern "10" causes the detector to enter film mode. A return to camera mode (called video mode) is performed when a detected pattern is inconsistent with film mode, namely a pattern of two ones. In case no motion is detected the present mode, either film or camera mode, is maintained.

Reference WO 00/51355 describes a method and an apparatus for classifying video fields as being either interlaced or progressive. Moreover, scene changes and repeat fields, which result from a 3:2 pulldown, are also detected. The interlaced/progressive decision for the current field is made in accordance with accumulated absolute pixel differences, the decision for the previous frame, and the amount of motion that is present in the current field. Repeat-fields and scene changes are detected based on absolute pixel differences accumulated on a sub-block basis.

Reference WO 00/33579 also describes a method for detecting field characteristics. To this end, each field is divided into a plurality of blocks and the number of "interlace patterns", which consists of four vertically adjacent pixels in two consecutive fields having luminance differences with certain signs and minimum magnitudes, is determined for each of these blocks. A field is identified as interlaced if there is a minimum number of blocks wherein the number of "interlace patterns" exceeds a predefined threshold, otherwise the field is identified as progressive.

A film mode detection apparatus has a plurality of areas of practical applications. A film mode indication, preferably together with a phase indication, detected for an interlaced video signal, may be utilized for format conversion processing between PAL and NTSC video sequences or vice versa. In particular, a film mode indication of a video sequence enables to add or eliminate correct fields in an interlaced video signal for providing a smooth movement in displayed video images. Further, an interlaced video signal may be treated as a progressively scanned signal by re-assembling the interlaced fields to complete frames. Such a progressive video sequence provides an improved signal source for a further processing of the video signal with improved image quality. Film mode detection may further be used in connection with video compression algorithms in order to identify redundant information and to reduce the amount of data to be transmitted.

When converting motion picture frame information into interlaced video information, frame data is converted into a field of odd lines and, next, a field of even lines. Due to a wrongly adjusted film converter it might happen that the succession order of even and odd lines of the fields is reversed, i.e. the even line fields are ahead of the corresponding odd line fields, when referring to the time domain. Such a reversion may also be corrected using film mode detection and the indication which pairs of fields belong to the same frame, here called motion phase indication.

Video information of an interlaced television signal may originate from motion picture film or from a video camera source. In an increasing number of situations a television video signal comprises video information of both sources in a single field, namely a main portion in film mode and a smaller portion in camera mode. Such fields regularly occur when television signals originating from motion picture film comprise inserted/overlaid information originating from a video camera source. Such additional information may be a text banner inserted in a bottom area of the video image. Said text banner or ticker usually displays service information provided by the broadcaster. Inserted service information may relate to the displayed image content, to a later program or to particular news information as e.g. stock exchange rates.

The inserted ticker may be at different positions within the field, depending on a broadcaster or country wide convention.

The afore mentioned mixed mode fields usually result from assembling video information obtained from different sources. In particular, new coding schemes as MPEG-4 allow for easy combination of image data originating from different sources within a single re-assembled image. Thus, a single field may comprise data originating from motion picture film, from a video camera source and/or from computer generated scenes.

In most fields in "mixed" mode almost all image information originates from image information in a first mode wherein only a small proportion results from data in a second mode (e.g. ticker insertion). Conventionally only the predominant first mode will be detected. Thus, the small proportion of image information in the second mode is disregarded.

Such conventional detectors may cause objectionable errors in the reproduced image as an employed image processing device can not take the characteristics of the smaller image portion into account.

It is the object of the present invention to provide an improved method and apparatus for film mode detection.

This is achieved by the features of the independent claims. Preferred embodiments are the subject matter of dependent claims.

According to the present invention pixel differences are calculated for corresponding pixels of consecutive fields and the calculated differences are accumulated for two different predefined portions of pixels of each field. A subsequent motion detection is based on the accumulated difference values for both image portions.

The teaching allows to detect motion between fields even if the video information originating from a video camera source is only present in a small proportion of image data of the field. Thus, a film mode detection apparatus and method according to the present invention will indicate "camera mode" even when a large proportion of "film mode" video data is present within an image. Based on these motion indications objectionable errors may be avoided when processing and reproducing "mixed mode" video data.

Based on the use of two image portions in order to decide whether motion is present between two consecutive fields, film mode detection is performed more accurately.

The invention will be further described with reference to the accompanying drawings, in which:

Fig. 1a, 1b show timings of film frames converted to interlaced television signals according to PAL and NTSC standard, and the same signal delayed for a period of one field.

Fig. 2 shows a top-level block diagram of a film mode detection unit in an encoder according to the present invention.

Fig. 3 is a simplified block diagram showing details of an embodiment of a field difference unit (201).

Fig. 4 is a simplified block diagram showing details of an embodiment of a sequence register (202).

Fig. 5 is a flow-chart showing steps of a pattern matching algorithm, as embodied by the pattern matching unit (203).

Fig. 6 shows examples of a pattern matching for PAL television signals.

Fig. 7 shows examples of a pattern matching for NTSC television signals.

Fig. 8 shows an example of an image with a ticker insertion.

The top graphs in fig. 1a and 1b show a time scale wherein each division corresponds to the time period for one field of a corresponding television signal. Each time division in fig. 1a corresponds to 20ms and in fig. 1b to 16.6ms. The second graphs in fig. 1a and 1b give a corresponding time interval of a motion picture film frame having numbers 0, 1, 2, 3... For generating a PAL television signal, a motion picture frame rate of 25 frames per second is used wherein for a NTSC television signal a motion picture frame rate of 24 frames per second is used.

The third graphs in fig. 1a and 1b show a television signal $F_0$ comprising video fields. Each field of odd lines is marked with an "A" and each field of even lines with a "B". The film frame from which each field originates is indicated by the lower indexes. For instance, video fields $A_0$ and $B_0$ are based on film frame "0".

Video signal $F_1$ represents a television signal which corresponds to $F_0$ wherein each field being delayed by a time interval of one field. Correspondingly, a video signal $F_2$ would indicate a delay of two fields with respect to $F_0$.

The last graph in fig. 1a and 1b show whether an overall difference between $F_1$ and $F_0$ results in a low L or high H difference value. Each difference value L or H represents a low or high accumulated difference between the above depicted fields, respectively. As can be seen from figures 1a and 1b a difference between fields of the same index (originating from the same frame) result in a low difference level L and differences between fields of different index numbers (originating from different frames) result in a high H difference level.

When comparing the sequences of difference levels in figures 1a and 1b the difference level pattern result from the different employed pulldown techniques, either 2-2 or 3-2 pulldown.

A configuration of a film mode detection unit in an encoder according to the present invention is shown in fig. 2. The film mode detector 205 comprises three main components, namely a film difference unit 201, a sequence register 202 and a pattern matching unit 203. Further, the film mode detector comprises a mode switch 204 in order to output a particular mode, either film mode or camera mode.

The film mode detector 201 further outputs a "phase" signal indicating which two of the fields $F_0$, $F_1$, $F_2$ were generated from the same film frame. This information may alternatively be obtained from a sequence of motion indicators at a later stage.

The input video signal Y is supplied to a raster position correction unit 206. Vertically adjacent pixels of consecutive fields are adjusted to have corresponding pixel positions, providing raster neutral and thus directly comparable fields $F_0$.

The video signal $F_0$ is delayed by a field delay memory 207 providing a video signal $F_1$. Both video signals $F_0$, $F_1$ are supplied to a field difference unit 201 of said film mode detection apparatus 205. The field difference unit 201 calculates absolute differences between pixels at corresponding horizontal and vertical pixel positions of two consecutive fields $F_0$, $F_1$.

The absolute difference values are accumulated for all pixels of a signal $F_0$. The resulting field difference value $FD_{01}$ (between a current field of video signal $F_0$ and video signal $F_1$), and the stored field difference value $FD_{12}$ (between video signals $F_1$ and $F_2$) are supplied to a sequence register 202. Based on the calculated field differences FD the field difference unit 201 detects motion between consecutive fields and outputs a motion indicative phase bit for each transition between two fields.

According to the present invention, the field difference values $FD_{01}$, $FD_{12}$ comprise difference values accumulated for two different portions of pixels of a field, respectively having first accumulated differences values $FD_{01A}$, $FD_{12A}$ for a first portion of pixels and second accumulated difference values $FD_{01B}$, $FD_{12B}$ for a second portions of pixels within a field. Additional field difference values maybe calculated for further portions within a field and handled respectively.

Sequence register 202 receives the four field differences FD and detects whether motion is present between succeeding fields based on both field differences $FD_A$ and $FD_B$ for each field. A corresponding motion bit is generated and stored in the register. Preferably, said sequence register is configured to store 40 motion bits.

The stored motion bits are supplied to a pattern matching unit 203 for determining whether or not the input video signal originates from motion pictures frames. Depending on the detected patterns, a mode switch 204 outputs a "mode" signal indicating "film mode" or "camera mode".

The field difference unit 201 will be described in more detail with reference to figure 3. The field difference unit 201 receives simultaneously video signal $F_0$, $F_1$ representing two consecutive video fields. For a more accurate result, the processing of the field difference unit 201 is based on luminance information represented by an 8 bit data word per pixel.

In a different implementation the luminance and chrominance information might well have a data width of more than eight bits. In this case all following data processing is understood with a broader data path. Thus it can also be handled by this invention.

Based on the pixels $P_0$, $P_1$, which are in the same spatial position n and belong to corresponding signals $F_0$, $F_1$, the absolute pixel difference values APD are calculated in step 301. Each absolute pixel difference $APD_n$ again has a data width of eight bits. In order to emphasis on large differences only and on computational effort, the value of each APD may be shifted in step 302 by a shifting value SPD to the right in order to reduce the amount of data to be handled and to reduce the influence of noise on the determination result. It has turned out to be most effective to shift by a maximum of three bits. This operation is indicated by equation (1).

$$APD_n = \left|P_{n,0} - P_{n,1}\right| >> SPD \qquad (1)$$

The absolute differences APD are accumulated for at least two different portions A and B of pixels within a field, separately. Such a separate processing is indicated by separate processing paths in fig. 3 branching at decision step 303.

Preferably, said first image portion A comprises essentially all active pixels of a field. The second and further additional image portions B only comprise a particular, considerably smaller image portion for emphasizing motion detection between two fields on that smaller image portion. As will be explained in more detail below, the sensitivity for motion within said second portion B might be further increased by increasing the impact of said second portion on the motion detection procedure.

Depending on the particular area predefined for each portion A and B of the fields, the respective calculated absolute differences are accumulated in steps 304A, 304B separately. For the first portion A absolute pixel differences are accumulated in step 304A preferably for all pixels of a field or a particular image portion having an aspect ratio of 16:9. The field difference unit 201 may switch between both areas for the first portion A depending on a particular flag FMDR.

Pixels of a particular image portion B are accumulated in step 304B depending on an area definition by parameters TS and TH. These parameters define the position and height of portion B within the fields. An example of a possible area definition within a field can be obtained by reference to figure 8.

The resulting accumulated difference values may be shifted to the right in order to reduce hardware complexity of the further processing stages. It has turned out that at least a 2 bit shifting is advantageous for phase indication, because influences due to gaussian noise in the video signal are eliminated. The field difference values arrive at larger values proportional to both, the pixel data width and the field dimensions. Thus, the corresponding parameter SFD must be chosen adaptively to this proportional constants. The shift operation is shown in equation (2)

$$FD_{01} = \left(\sum_n APD_n\right) >> (2 + SFD) \qquad (2)$$

wherein $FD_{01}$ represents a field difference between a current field $F_0$ and a preceding field $F_1$ and n equals the number of active pixels in the field. The field difference unit outputs both accumulated field difference values $FD_{01A}$, $FD_{01B}$ which are calculated with respect to fields of $F_0$ and $F_1$. In addition, the preceding field difference values $FD_{12A}$, $FD_{12B}$ are supplied from the field difference unit 201 to the following processing stage, namely the sequence register 202.

The field difference unit 201 calculates in step 307 a phase indicator of one bit in order to indicate which of two fields are from the same film frame. A one indicates that fields $F_1$ and $F_2$ introduce a smaller field difference signal $FD_{12A}$ than the field $F_0$ and $F_1$ represented by the field difference signal $FD_{01A}$. A zero determines that $F_0$ and $F_1$ are more similar and thus could originate from the same film frame. In an alternative embodiment, this information is obtained from the stored motion indicators.

Fig. 4 shows a simplified block diagram of a sequence register 202. The sequence register 202 receives four field difference values supplied by said field difference unit 201, namely $FD_{01A}$ and $FD_{01B}$, $FD_{12A}$ and $FD_{12B}$. These field difference values relate to field differences of three consecutive fields and two different image portions A and B. Preferably, the field difference values relating to the same fields are combined before detecting motion information. The combination procedure will be described below in more detail.

In general, the motion bit is generated based on the value of field differences. Unfortunately, field differences are not only due to motion between consecutive fields but may also be due to vertical transitions, e.g. a horizontal dark line in front of a bright background. Such differences result from a vertical offset between odd and even fields. Thus, motion detection cannot only be based on the value of a field difference as this value also results from vertical transitions in a single frame.

The present invention uses an adaptive relative threshold in order to detect a transition between frames. According to the present invention, a current field difference $FD_{01}$ and the preceding field difference values $FD_{12}$ are compared. The preceding field difference value $FD_{12}$ is chosen rather to be weighted in step 401 by a factor K. Factor K preferably larger than 1 for best operation takes one of four values 2, 3/2, 4/3, 5/4. Any smaller or higher value did not lead to a better result. A field difference is considered to represent motion when the current field difference $FD_{01}$ being equal or greater than the preceding field difference $FD_{12}$ multiplied by factor K. Thus, if K=2, the current field difference $FD_{01}$ has to be twice as large as the preceding field difference $FD_{12}$ in order to assume motion between frames $F_0$ and $F_1$, otherwise, the fields $F_1$ and $F_2$ originate from the same frame. This comparison procedure is given in equation (3).

$$FD_{12} * K \leq FD_{01} \qquad (3)$$

Correspondingly, a motion bit will be supplied to the sequence register. The sequence register 405 is being configured to store the number of motion bits necessary to reliably detect a film scene. It must not be longer than an average scene. Because then an interruption in the pattern might occur and the film mode will not be detected. Register 405 is a FIFO buffer (first in first out) with random access.

As motion detection is based on a particular amount of differences between consecutive fields, it may happen that motion detection fails between fields having no or only few motion in between. Such erroneously not detected film mode does not affect image quality as the scan/upconversion or other image processing of fields having almost no motion is not adversely affected.

Currently broadcast television programs occasionally comprise a ticker inserted within the lower third of a screen. As the main portion of each field may be in film mode, film mode will be detected. When the ticker insertion is in camera mode, a scan- or upconversion from interlaced to e.g. progressive (i.e. a sequence of complete frames) would result in deteriorated, hardly readable text of the ticker and the encoding efficiency is correspondingly effected. In such a case, namely when video data in camera mode is inserted into a field generally being in film mode, "camera mode" has to be detected in order to enable a correct up-conversion and not to affect the further image processing and, finally, the perceived image quality.

For that purpose, the field difference unit 201 additionally calculates (at least) a second field difference value for a second portion B of pixels within each field. Two parameters define the second portion of pixels, namely TS and TH. Parameter TS indicates the vertical position of the top of the second portion B with respect to the top of the fields. The second parameter TH indicates the height of the second portion with respect to the remaining height of the field, i.e. the distance between the top of the second portion B and the bottom of the fields. This is shown in fig. 8. Within a field 801, parameters TS and TH give the vertical position and size of the second portion B. When using these predefined values for TS and TH only two bit data have to be used for the second portion B resulting in a simple hardware configuration. In a further preferred embodiment, the horizontal size of portion B maybe varied.

The field difference unit 201 outputs four field difference values $FD_{01A}$, $FD_{01B}$, $FB_{12A}$, $FB_{12B}$. The field difference values $FD_{01B}$, $FD_{12B}$ resulting from the second portion are weighted in order to adjust the influence of the second portion on the motion detection result. For such a weighting procedure, the filed difference values for portion B are shifted in step 402 to the left. The amount of the left shift of the field difference values is set by parameter TW, which must be chosen adapetively to the overall field motion. Only this leads to a result accurate for all scenes. The comparison procedure carried out by motion detection unit 404 is given by equation (4).

$$K * (FD_{12A} + FD_{12B} \ll TW) \leq (FD_{01A} + FD_{01B} \ll TW) \qquad (4)$$

Fig. 5 represents a flow-chart of those steps carried out during pattern matching. In order to detect film mode in a sequence of motion bits which are provided by sequence register 202, a particular pattern of motion bits has to be detected.

Motion picture conversion according to 2-2 pulldown and 3-2 pulldown results in a characteristic pattern of stored motion bits. When an interlaced video, in particular television signal being generated by a 2-2 pulldown, FIFO 405 stores a repeated sequence of bits "10". In case of an NTSC video signal, generated by the 3-2 two pulldown technique, a bit sequence of "10010" occurs repetitively in register 405 when read from right to left. In the following paragraphs these two bit sequences are referred to as reference pattern. One of both may be selected depending on a parameter FORMAT (0=PAL, 1=NTSC).

A simple algorithm of pattern matching may detect one complete pattern in the motion bit sequence and correspondingly indicate film mode when detected. In order to provide a more reliable film mode indication, the present invention examines forty motion bits. Such a more complex matching procedure allows to implement detection error concealment algorithms.

According to the present invention pattern matching generates four different matching result registers (full_pat, beg_pat, end_pat, no_pat). Three of them indicate a matching result of the selected reference pattern with the stored data, namely full_pat for a complete pattern matching, beg_pat for the pattern running into the register and end_pat for the pattern running out of the register. Finally, it is detected whether no pattern or a destroyed pattern is present (no_pat).

The search procedure will be described in detail with reference to figure 5. Index i is provided in order to select all registered positions 1 to 40 of register 405. For pattern detection, the following steps are carried out.

First, all indexes are set to zero. index i is incremented by the length of the reference pattern, i.e. by 2 for a PAL television signal and by 5 for a NTSC television signal.

Second, in case the reference pattern is completely detected for the corresponding register positions, register full_pat is incremented by 1. An example for this is given in fig. 6a and fig. 6b for a PAL television signal at register positions 2 and 4. A corresponding example is given for a NTSC television signal in fig. 7a and fig. 7b.

In addition, a beginning pattern is searched when, at the beginning of the register, a number of bits remain having a number less than a complete pattern. Fig. 6c, Fig. 7c and Fig. 7d give examples for a detected "beginning pattern" preceding an already detected pattern for the immediate consecutive motion bit positions. When a partial pattern is found at the beginning of the register, which is in positional conformity with the detected complete pattern, register beg_pat is incremented by 1. The same situation applies to fig. 6d and fig. 7e and f. The situations correspond to those of fig. 6c and fig.7c and d. The only difference is that a first complete pattern could not be detected due to motion detection errors.

Finally, an ending pattern is shown in fig. 6e and fig. 7g and h. Register end_pat is incremented in situations corresponding to those of the beg_pat register.

In case no complete pattern has been detected, index i and register no_pat are incremented by one. Then, the processing returns to the first step.

Next, the conditions for signalling a mode switch are checked and, when the conditions are met or i = 40, the search is stopped. Otherwise execution continues at step one.

The two existing reference patterns described for a conversion into PAL and NTSC interlaced video sequences may be replaced by new reference patterns relating to e.g. computer generated sequences.

Referring to fig. 2, the operation of mode switch 204 is described. Mode switch 204 receives count values for each pattern register, namely the registers full_pat, beg_pat, end_pat and no_pat. In addition, the mode switch receives parameters defining switching conditions in order to provide a more reliable film mode indication. These parameters, CDLY and FDLY, determine when to switch from film mode indication to camera mode indication and vice versa in order to effect a hysteresis behaviour. Such a hyseresis behaviour smoothes the switching between film and camera mode resulting in a less obvious change of image quality.

CDLY determines the number of fields which do not conform to a film mode pattern before the mode switch returns to camera mode. A single pattern not being equal to a film mode pattern should not initiate a return to camera mode. Depending on the image content and quality a number of 2 to 5 consecutive not deleted film mode patterns provide good results with respect to image quality improvements.

The second parameter FDLY determines the number of consecutive fields which have to be in conformity with a reference pattern before mode switch 204 outputs a film mode indication. For a switch to film mode a single pattern not being equal to a film mode pattern should not be admitted.

These switching conditions are given by the following formula wherein equation (5) relates to a switch from film to camera mode and equation (6) relates to a switch from camera into film mode.

$$(no_pat \geq CDLY)\ \&\&\ !beg_pat \qquad (5)$$

$$full_pat^* (2\text{-}PAL/5\text{-}NTSC) + beg_pat + end_pat > FDLY \qquad (6)$$

Summarising, the present invention provides a considerable increase in accuracy of film mode detection by taking an additional image portion of the fields into account when detecting motion between fields of a video sequence.

## Claims

1. A method for detecting film mode in a sequence of video fields, comprising the steps of:

   receiving a sequence of video fields (Y);
   calculating (301) absolute pixel differences (APD) between spatially corresponding pixels of a pair of two consecutive video fields (F0, F1);
   accumulating (304A, 304B) said absolute pixel differences (APD);
   **characterized in that**
   the step of accumulating (304A, 304B) is performed separately for a first predefined portion (A) and a second predefined portion (B) of the received video fields (Y); and by further comprising the steps of:

      computing a combined field difference value by weighting (402) the accumulated absolute pixel differences of the second predefined portion by a predetermined factor (TW), and by adding (403) the accumulated absolute pixel differences of the first predefined portion and the weighted accumulated absolute pixel differences of the second predefined portion;
      determining (404) whether or not motion is present between the pair of consecutive video fields (F0, F1) based on the combined field difference value;
      storing a sequence of motion indicators (405), each motion indicator indicating a result of the determining step (404); and
      indicating film mode when a predefined pattern is detected within the sequence of motion indicators.

2. A method according to claim 1 wherein said second predefined portion of the received video fields (Y) is adjustable in size and/or position within a field.

3. A method according to claim 1 or 2 wherein motion between two consecutive fields is determined by comparing the combined field difference value computed for a current field with a predetermined threshold value and motion is determined when said combined field difference value of the current field is larger than said threshold value.

4. A method according to claim 3, wherein said threshold value is the combined field difference value computed for the previous field.

5. A method according to claim 4, wherein said threshold value is multiplied (401) by a factor (K) prior to said comparing step, said factor (K) being larger than 1.

6. A method according to any of claims 1 to 5, wherein said predefined pattern being a pull-down pattern for the conversion of film frames into video fields.

7. A method according to any of claims 1 to 6, wherein the film mode indication is terminated after said predefined pattern is not detected for a predefined number of consecutive fields.

8. A method according to any of claims 1 to 7 wherein said pixel differences are calculated based on luminance information of the pixels.

9. A method according to any of claims 1 to 8 wherein an indication which two of three consecutive fields originate from the same film frame is generated based on the accumulated absolute pixel differences of the first predefined portion ($FD_{10A}$ , $FD_{12A}$). wherein those two fields are indicated to originate from the same film frame that have the smaller value of the accumulated absolute pixel differences of the first predefined portion ($FD_{01A}$ , $FD_{12A}$).

10. An apparatus for detecting film mode in a sequence of video fields (Y), comprising:

a calculating means (301) for calculating absolute pixel differences (APD) between spatially corresponding pixels of a pair of two consecutive video fields (F0, F1);
a first accumulator (304A) for accumulating absolute pixel differences (APD);
**characterized by**
a second accumulator (304B) for accumulating absolute pixel differences (APD), wherein
the first and the second accumulator (304A, 304B) are separately accumulating absolute pixel differences for a first predefined portion (A) and a second predefined portion (B) of the received video fields (Y), respectively;
a computing means (402, 403) for computing a combined field difference value by weighting the absolute pixel differences accumulated by the second accumulator (304B) by a predetermined factor (TW), and by adding the absolute pixel differences accumulated by the first accumulator and the weighted absolute pixel differences accumulated by the second accumulator;
a motion detector (404) for determining whether or not motion is present between the pair of consecutive video fields (F0, F1) based on the combined field difference value;
a storing means (405) for storing a sequence of motion indicators, each motion indicator indicating an output of the motion detector (404);
a pattern matching unit (203) for comparing a predefined pattern with the sequence of motion indicators (405); and
a mode switch (204) for indicating film mode when the pattern matching unit (203) has detected the predefined pattern.

**11.** An apparatus according to claim 10, further comprising an offset control means for adjusting the position of said second portion within a field and/or size control means, adjusting the size of said second portion in vertical and/or horizontal direction.

**12.** An apparatus according to claim 10 or 11 further comprising a comparator (404) for comparing the combined field difference value computed for a current field with a predetermined threshold value, indicating motion when said field difference value of the current field being larger than said threshold value.

**13.** An apparatus according to claim 12, wherein a field difference value computed for the previous field is applied to the comparator (404) as said threshold value.

**14.** An apparatus according to claim 13, further comprising a multiplier (401) for multiplying the combined field difference value of the previous field by a factor (K) and providing the result to the comparator (404) as said threshold value, said factor (K) being larger than 1.

**15.** An apparatus according to any of claims 10 to 14, further comprising a memory for storing a pull-down pattern of a particular conversion of film frames into video fields, said stored pull-down pattern being applied to said pattern matching unit (203) as said predefined pattern.

**16.** An apparatus according to any of claims 10 to 15, wherein
said pattern matching unit (203) comprises a register (no_pat) storing a count value which is incremented based on the comparison result each time said predefined pattern is not detected within said sequence of motion indicators, said mode switch (204) comprising a comparator for detecting whether or not the count value provided from said register (no_pat) exceeds a predetermined threshold value (CDLY); and
said mode switch (204) maintains a film mode indication based on the comparison result as long as said count value does not exceed the predetermined threshold value (CDLY).

**17.** An apparatus according to any of claims 10 to 16, further comprising a signal separator to only provide the luminance information of the pixels to said subtracter (301).

**18.** An apparatus according to any of claims 10 to 17, further comprising a phase detector (307) receiving the two values of accumulated absolute pixel differences ($FD_{01A}$, $FD_{12A}$) calculated with respect to three consecutive fields (F0, F1, F2) for indicating which two of the three consecutive fields originate from the same film frame based on the absolute pixel differences accumulated by the first accumulator, wherein those two fields are indicated to originate from the same film frames that have the smaller value of the absolute pixel differences accumulated by the first accumulator.

**Patentansprüche**

1. Verfahren zum Erfassen von Film-Modus in einer Sequenz von Video-Teilbildern, das die folgenden Schritte umfasst:

   Empfangen einer Sequenz von Video-Teilbildern (Y);
   Berechnen (301) absoluter Pixel-Differenzen (APD) zwischen räumlich einander entsprechenden Pixeln eines Paars aus zwei aufeinanderfolgenden Video-Teilbildern (F0, F1);
   Akkumulieren (304A, 304B) der absoluten Pixel-Differenzen (APD);
   **dadurch gekennzeichnet, dass**
   der Schritt des Akkumulierens (304A, 304B) separat für einen ersten vordefinierten Abschnitt (A) und einen zweiten vordefinierten Abschnitt (B) der empfangenen Video-Teilbilder (Y) durchgeführt wird; und **dadurch**, dass das Verfahren des Weiteren die folgenden Schritte umfasst:

      Berechnen eines kombinierten Teilbild-Differenzwertes durch Gewichten (402) der akkumulierten absoluten Pixel-Differenzen des zweiten vordefinierten Abschnitts mit einem vorgegebenen Faktor (TW) sowie durch Addieren (403) der akkumulierten absoluten Pixel-Differenzen des ersten vordefinierten Abschnitts und der gewichteten akkumulierten absoluten Pixel-Differenzen des zweiten vordefinierten Abschnitts;
      auf Basis des kombinierten Teilbild-Differenzwertes Feststellen (404), ob Bewegung zwischen dem Paar aufeinanderfolgender Video-Teilbilder (F0, F1) vorhanden ist oder nicht;
      Speichern einer Sequenz von Bewegungs-Indikatoren (405), wobei jeder Bewegungs-Indikator ein Ergebnis des Feststellschritts (404) anzeigt; und
      Anzeigen von Film-Modus, wenn ein vordefiniertes Muster innerhalb der Sequenz von Bewegungs-Indikatoren erfasst wird.

2. Verfahren nach Anspruch 1 wobei der zweite vordefinierte Abschnitt der empfangenen Video-Teilbilder (Y) bezüglich Größe und/oder Position innerhalb eines Teilbildes angepasst werden kann.

3. Verfahren nach Anspruch 1 oder 2, wobei Bewegung zwischen zwei aufeinanderfolgenden Teilbildern festgestellt wird, indem der für ein aktuelles Teilbild berechnete kombinierte Teilbild-Differenzwert mit einem vorgegebenen Schwellenwert verglichen wird, und Bewegung festgestellt wird, wenn der kombinierte Teilbild-Differenzwert des aktuellen Teilbildes größer ist als der Schwellenwert.

4. Verfahren nach Anspruch 3, wobei der Schwellenwert der für das vorhergehende Teilbild berechnete kombinierte Teilbild-Differenzwert ist.

5. Verfahren nach Anspruch 4, wobei der Schwellenwert vor dem Vergleichsschritt mit einem Faktor (K) multipliziert wird (401), wobei der Faktor (K) größer ist als 1.

6. Verfahren nach einem der Ansprüche 1 bis 5, wobei das vordefinierte Muster ein Pulldown-Muster für die Umwandlung von Filmbildern in Video-Teilbilder ist.

7. Verfahren nach einem der Ansprüche 1 bis 6, wobei die Anzeige des Film-Modus beendet wird, wenn das vordefinierte Muster über eine vordefinierte Anzahl aufeinanderfolgender Teilbilder nicht erfasst wird.

8. Verfahren nach einem der Ansprüche 1 bis 7, wobei die Pixel-Differenzen auf Basis von Luminanz-Informationen der Pixel berechnet werden.

9. Verfahren nach einem Ansprüche 1 bis 8, wobei eine Anzeige dahingehend, welches der drei aufeinanderfolgenden Teilbilder aus dem gleichen Filmbild stammt, auf Basis der akkumulierten absoluten Pixel-Differenzen des ersten vordefinierten Abschnitts ($FD_{01A}$, $FD_{12A}$) erzeugt wird, und für diejenigen zwei Felder, die den kleineren Wert der akkumulierten absoluten Pixel-Differenzen des ersten vordefinierten Abschnitts ($FD_{01A}$, $FD_{12A}$) haben, angezeigt wird, dass sie aus demselben Filmbild stammen.

10. Vorrichtung zum Erfassen von Film-Modus in einer Sequenz von Video-Teilbildern (Y), die umfasst:

    eine Berechnungseinrichtung (301) zum Berechnen absoluter Pixel-Differenzen (9) zwischen räumlich einander entsprechenden Pixeln eines Paars aus zwei aufeinanderfolgenden Video-Teilbildern (F0, F1);
    eine erste Akkumulationseinrichtung (304A) zum Akkumulieren absoluter Pixel-Differenzen (APD);

**gekennzeichnet durch**
eine zweite Akkumulationseinrichtung (304B) zum Akkumulieren absoluter Pixel-Differenzen (12),
wobei die erste und die zweiten Akkumulationseinrichtung (304A, 304B) separat absolute Pixel-Differenzen für einen ersten vordefinierten Abschnitt (A) bzw. einen zweiten vordefinierten Abschnitt (B) der empfangenen Video-Teilbilder (Y) akkumulieren;
eine Berechnungseinrichtung (402, 403), mit der ein kombinierter Teilbild-Differenzwert berechnet wird, indem die **durch** die zweite Akkumulationseinrichtung (304B) akkumulierten absoluten Pixel-Differenzen mit einem vorgegebenen Faktor (TW) gewichtet werden und
die **durch** die erste Akkumulationseinrichtung akkumulierten absoluten Pixel-Differenzen und die **durch** die zweite Akkumulationseinrichtung akkumulierten gewichteten absoluten Pixel-Differenzen addiert werden;
eine Bewegungs-Erfassungseinrichtung (404), mit der auf Basis des kombinierten Teilbild-Differenzwertes festgestellt wird, ob Bewegung zwischen dem Paar aufeinanderfolgender Video-Teilbilder (F0, F1) vorhanden ist oder nicht;
eine Speichereinrichtung (405) zum Speichern einer Sequenz von Bewegungs-Indikatoren, wobei jeder Bewegungs-Indikator eine Ausgabe der Bewegungs-Erfassungseinrichtung (404) anzeigt;
eine Muster-Abgleicheinheit (203) zum Vergleichen eines vordefinierten Musters mit der Sequenz von Bewegungs-Indikatoren (405); und
eine Modus-Umschalteinrichtung (204), die Film-Modus anzeigt, wenn die Muster-Abgleicheinheit (203) das vordefinierte Muster erfasst hat.

**11.** Vorrichtung nach Anspruch 10, die des Weiteren eine Offset-Steuereinrichtung, mit der die Position des zweiten Abschnitts innerhalb eines Teilbildes angepasst wird, und/oder eine Größen-Steuereinrichtung umfasst, mit der die Größe des zweiten Abschnitts in vertikaler und/oder horizontaler Richtung angepasst wird.

**12.** Vorrichtung nach Anspruch 10 oder 11, die des Weiteren eine Vergleichseinrichtung (404) umfasst, mit der der für ein aktuelles Teilbild berechnete kombinierte Teilbild-Differenzwert mit einem vorgegebenen Schwellenwert verglichen wird, wobei Bewegung angezeigt wird, wenn der Teilbild-Differenzwert des aktuellen Feldes größer ist als der Schwellenwert.

**13.** Vorrichtung nach Anspruch 12, wobei ein für das vorhergehende Teilbild berechneter Teilbild-Differenzwert als der Schwellenwert in der Vergleichseinrichtung (404) angewendet wird.

**14.** Vorrichtung nach Anspruch 13, die des Weiteren ein Multiplizierglied (401) umfasst, mit dem der kombinierte Teilbild-Differenzwert des vorhergehenden Teilbildes mit einem Faktor (K) multipliziert wird und das Ergebnis der Vergleichseinrichtung (404) als der Schwellenwert bereitgestellt wird, wobei der Faktor (K) größer ist als 1.

**15.** Vorrichtung nach einem der Ansprüche 10 bis 14, die des Weiteren einen Speicher zum Speichern eines Pulldown-Musters einer speziellen Umwandlung von Filmbildern in Video-Teilbilder umfasst, wobei das gespeicherte Pulldown-Muster in der Muster-Abgleicheinheit (203) als das vordefinierte Muster angewendet wird.

**16.** Vorrichtung nach einem der Ansprüche 10 bis 15, wobei
die Muster-Abgleicheinheit (203) ein Register (no_pat) umfasst, das einen Zählwert speichert, der auf Basis des Vergleichsergebnisses immer dann inkrementiert wird, wenn das vordefinierte Muster nicht innerhalb der Sequenz von Bewegungs-Indikatoren erfasst wird,
die Modus-Umschalteinrichtung (204) eine Vergleichseinrichtung umfasst, mit der erfasst wird, ob der von dem Register (no_pat) bereitgestellte Zählwert einen vorgegebenen Schwellenwert (CDLY) übersteigt oder nicht; und
die Modus-Umschalteinrichtung (204) eine Film-Modus-Anzeige auf Basis des Vergleichsergebnisses beibehält, solange der Zählwert den vorgegebenen Schwellenwert (CDLY) nicht übersteigt.

**17.** Vorrichtung nach einem der Ansprüche 10 bis 16, die des Weiteren eine Signal-Trenneinrichtung umfasst, die der Subtrahiereinrichtung (301) nur die Luminanz-Informationen der Pixel bereitstellt.

**18.** Vorrichtung nach einem der Ansprüche 10 bis 17, die des Weiteren einen Phasendetektor (307) umfasst, der die zwei Werte akkumulierter absoluter Pixel-Differenzen ($FD_{01A}$, $FD_{12A}$), berechnet in Bezug auf drei aufeinanderfolgende Teilbilder (F0, F1, F2), empfängt, um auf Basis der durch die erste Akkumulationseinrichtung akkumulierten absoluten Pixel-Differenzen anzuzeigen, welche zwei der drei aufeinanderfolgenden Teilbilder aus dem gleichen Filmbild stammen, wobei für diejenigen zwei Teilbilder, die den kleineren Wert der durch die erste Akkumulationseinrichtung akkumulierten absoluten Pixel-Differenzen haben, angezeigt wird, dass sie aus den gleichen Filmbildern stammen.

## Revendications

1. Procédé permettant de détecter un mode film dans une séquence de demi-trames vidéo, comprenant les étapes consistant à :

    recevoir une séquence de demi-trames vidéo (Y),
    calculer (301) des différences absolues de pixels (APD) entre des pixels correspondant spatialement appartenant à une paire de deux demi-trames vidéo consécutives (F0, F1),
    accumuler (304A, 304B) lesdites différences absolues de pixels (APD),
    **caractérisé en ce que**
    l'étape d'accumulation (304A, 304B) est effectuée séparément pour une première partie prédéfinie (A) et une seconde partie prédéfinie (B) des demi-trames vidéo reçues (Y), et **en ce qu'**il comprend en outre les étapes consistant à :

        calculer une valeur combinée de différence de demi-trames en pondérant (402) les différences absolues de pixels accumulées de la seconde partie prédéfinie par un facteur prédéterminé (TW) et en ajoutant (403) les différences accumulées absolues de pixels de la première partie prédéfinie et les différences pondérées accumulées absolues de pixels de la seconde partie prédéfinie,
        déterminer (404) si un mouvement est ou non présent entre la paire de demi-trames vidéo (F0, F1) sur la base de la valeur combinée de différence de demi-trames,

    mémoriser une séquence d'indicateurs de mouvement (405), chaque indicateur de mouvement indiquant un résultat de l'étape de détermination (404), et
    indiquer le mode film lorsqu'une séquence prédéfinie est détectée à l'intérieur de la séquence d'indicateurs de mouvement.

2. Procédé selon la revendication 1, dans lequel la seconde partie prédéfinie des demi-trames vidéo reçues (Y) est ajustable en termes de taille et/ou de position à l'intérieur d'une demi-trame.

3. Procédé selon la revendication 1 ou 2, dans lequel le mouvement entre deux demi-trames consécutives est déterminé en comparant la valeur combinée de différence de demi-trames calculée pour une demi-trame en cours à une valeur de seuil prédéterminée, et le mouvement est déterminé lorsque ladite valeur combinée de différence de demi-trames de la demi-trame en cours est plus grande que ladite valeur de seuil.

4. Procédé selon la revendication 3, dans lequel ladite valeur de seuil est la valeur combinée de différence de demi-trames calculée pour la demi-trame précédente.

5. Procédé selon la revendication 4, dans lequel ladite valeur de seuil est multipliée (401) par un facteur (K) avant ladite étape de comparaison, ledit facteur (K) étant supérieur à 1.

6. Procédé selon l'une quelconque des revendications 1 à 5, dans lequel ladite séquence prédéfinie est une séquence d'ajustement à 24 images par seconde destinée à la conversion de trames de film en demi-trames vidéo.

7. Procédé selon l'une quelconque des revendications 1 à 6, dans lequel l'indication de mode film est terminée après qu'il n'est pas détecté ladite séquence prédéfinie pour un nombre prédéfini de demi-trames consécutives.

8. Procédé selon l'une quelconque des revendications 1 à 7, dans lequel lesdites différences de pixels sont calculées sur la base des informations de luminance des pixels.

9. Procédé selon l'une quelconque des revendications 1 à 8, dans lequel une indication est générée, de ce que deux parmi trois demi-trames consécutives proviennent de la même trame de film, sur la base des différences accumulées absolues de pixels de la première partie prédéfinie ($FD_{01A}$, $FO_{12A}$), ces deux demi-trames étant indiquées provenir de la même trame de film, lesquelles présentent la valeur la plus faible des différences accumulées absolues de pixels de la première partie prédéfinie ($FD_{01A}$, $FD_{12A}$).

**10.** Appareil permettant de détecter un mode film dans une séquence de demi-trames vidéo (Y), comprenant :

un moyen de calcul (301) permettant de calculer des différences absolues de pixels (APD) entre des pixels correspondant spatialement appartenant à une paire de deux demi-trames vidéo consécutives (F0, F1),
un premier accumulateur (304A) destiné à accumuler des différences absolues de pixels (APD),
**caractérisé par**
un second accumulateur (304B) destiné à accumuler des différences absolues de pixels (APD),
dans lequel
les premier et second accumulateurs (304A, 304B) accumulent séparément et respectivement des différences absolues de pixels pour une première partie prédéfinie (A) et une seconde partie prédéfinie (B) des demi-trames vidéo reçues (Y),
un moyen de calcul (402, 403) destiné à calculer une valeur combinée de différence de demi-trames en pondérant les différences absolues de pixels accumulées par le second accumulateur (304B) par un facteur prédéterminé (TW) et en additionnant les différences absolues de pixels accumulées par le premier accumulateur et les différences pondérées absolues de pixels accumulées par le second accumulateur,
un détecteur de mouvement (404) destiné à déterminer si un mouvement est présent ou non entre la paire de demi-trames vidéo consécutives (F0, F1) sur la base de la valeur combinée de différence de demi-trames,
un moyen de stockage (405) destiné à mémoriser une séquence d'indicateurs de mouvement, chaque indicateur de mouvement indiquant une sortie du détecteur de mouvement (404),
une unité de mise en correspondance de séquences (203) destinée à comparer une séquence prédéfinie à la séquence des indicateurs de mouvement (405), et un commutateur de mode (204) destiné à indiquer un mode film lorsque l'unité de mise en correspondance de séquences (203) a détecté la séquence prédéfinie.

**11.** Appareil selon la revendication 10, comprenant en outre un moyen de commande de décalage permettant d'ajuster la position de ladite seconde partie à l'intérieur d'une demi-trame et/ou un moyen de commande de taille ajustant la taille de ladite seconde partie dans la direction verticale et/ou horizontale.

**12.** Appareil selon la revendication 10 ou 11, comprenant en outre un comparateur (404) permettant de comparer à une valeur de seuil prédéterminée la valeur combinée de différence de demi-trames calculée pour la demi-trame en cours, en indiquant un mouvement lorsque ladite valeur de différence de demi-trames de la demi-trame en cours est supérieure à ladite valeur de seuil.

**13.** Appareil selon la revendication 12, dans lequel une valeur de différence de demi-trames, calculée pour la demi-trame précédente, est appliquée au comparateur (404) comme étant ladite valeur de seuil.

**14.** Appareil selon la revendication 13, comprenant en outre un multiplieur (401) destiné à multiplier la valeur combinée de différence de demi-trames de la demi-trame précédente par un facteur (K) et à fournir le résultat au comparateur (404) comme étant ladite valeur de seuil, ledit facteur (K) étant supérieur à 1.

**15.** Appareil selon l'une quelconque des revendications 10 à 14, comprenant en outre une mémoire destinée à stocker une séquence d'ajustement à 24 images par seconde, appartenant à une conversion particulière de trames de film, en demi-trames vidéo, ladite séquence d'ajustement à 24 images par seconde étant appliquée à ladite unité de mise en correspondance de séquences (203) comme étant ladite séquence prédéfinie.

**16.** Appareil selon l'une quelconque des revendications 10 à 15, dans lequel
ladite unité de mise en correspondance de séquences (203) comprend un registre (no_pat) stockant une valeur de comptage qui est incrémentée sur la base du résultat de comparaison chaque fois qu'il n'est pas détecté ladite séquence prédéfinie à l'intérieur de ladite séquence d'indicateurs de mouvement,
ledit commutateur de mode (204) comprenant un comparateur destiné à détecter si la valeur de comptage fournie en provenance dudit registre (no_pat) dépasse ou non une valeur de seuil prédéterminée (CDLY), et
ledit commutateur de mode (204) maintient une indication de mode film fondée sur le résultat de comparaison tant que ladite valeur de comptage ne dépasse pas la valeur de seuil prédéterminée (CDLY).

**17.** Appareil selon l'une quelconque des revendications 10 à 16, comprenant en outre un séparateur de signal destiné à ne fournir que les informations de luminance des pixels au dit soustracteur (301).

**18.** Appareil selon l'une quelconque des revendications 10 à 17, comprenant en outre un détecteur de phase (307) recevant les deux valeurs des différences accumulées absolues de pixels ($FD_{01A}$, $FD_{12A}$) calculées par rapport à trois demi-trames consécutives (F0, F1, F2) dans le but d'indiquer lesquelles des deux parmi les trois demi-trames consécutives proviennent de la même trame de film sur la base des différences absolues de pixels accumulées par le premier accumulateur, ces deux demi-trames étant indiquées provenir des mêmes trames de film qui présentent la valeur la plus faible des différences absolues de pixels accumulées par le premier accumulateur.

Fig. 1

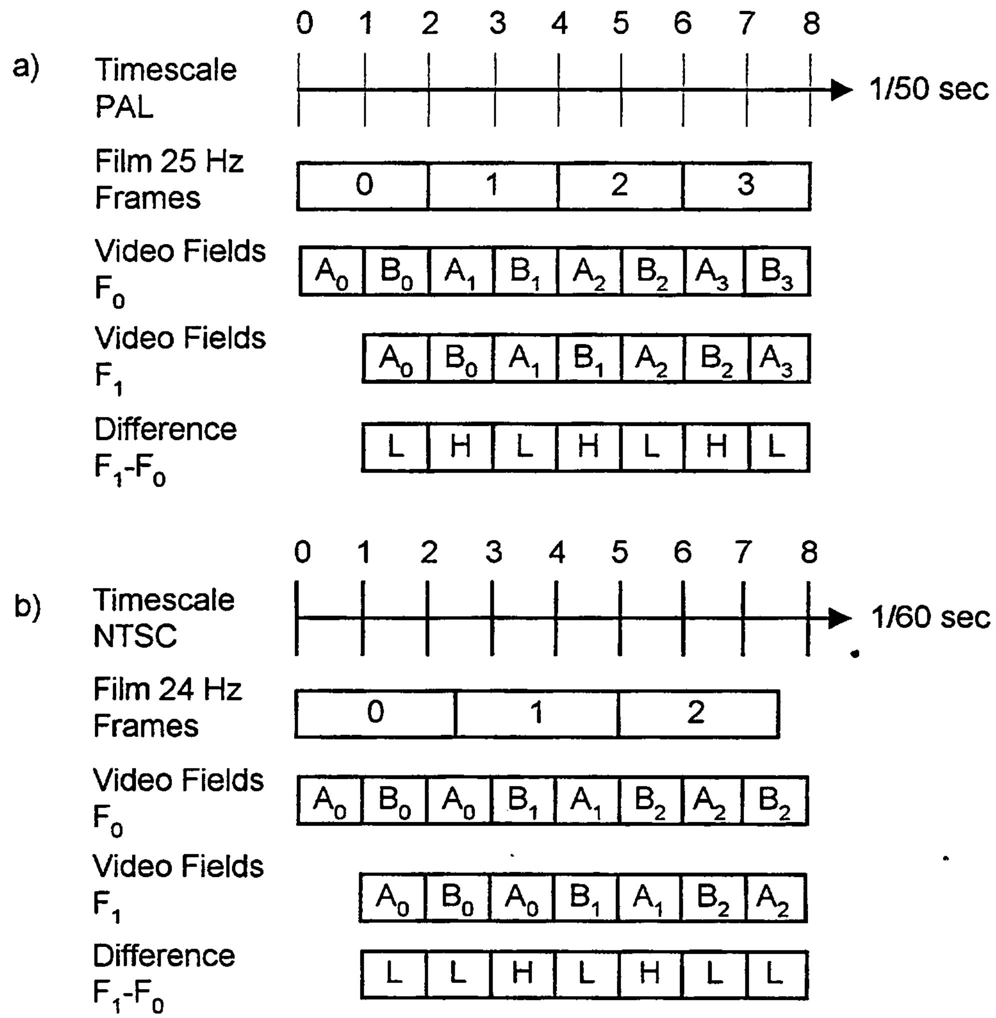
a)
Timescale PAL
0 1 2 3 4 5 6 7 8
1/50 sec
Film 25 Hz Frames
0 1 2 3
Video Fields F0
A0 B0 A1 B1 A2 B2 A3 B3
Video Fields F1
A0 B0 A1 B1 A2 B2 A3
Difference F1-F0
L H L H L H L
b)
Timescale NTSC
0 1 2 3 4 5 6 7 8
1/60 sec
Film 24 Hz Frames
0 1 2
Video Fields F0
A0 B0 A0 B1 A1 B2 A2 B2
Video Fields F1
A0 B0 A0 B1 A1 B2 A2
Difference F1-F0
L L H L H L L

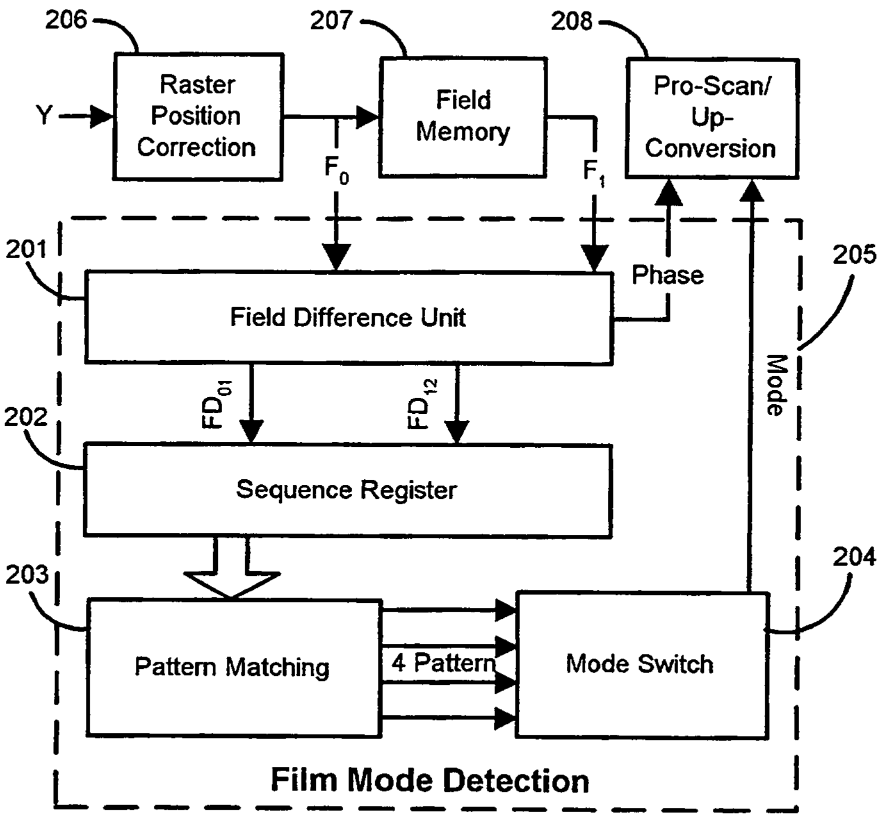
206
207
208
Y
Raster Position Correction
Field Memory
Pro-Scan/ Up-Conversion
F0
F1
201
205
Phase
Field Difference Unit
Mode
FD01
FD12
202
Sequence Register
203
204
Pattern Matching
4 Pattern
Mode Switch
Film Mode Detection

Fig. 2

Fig. 3

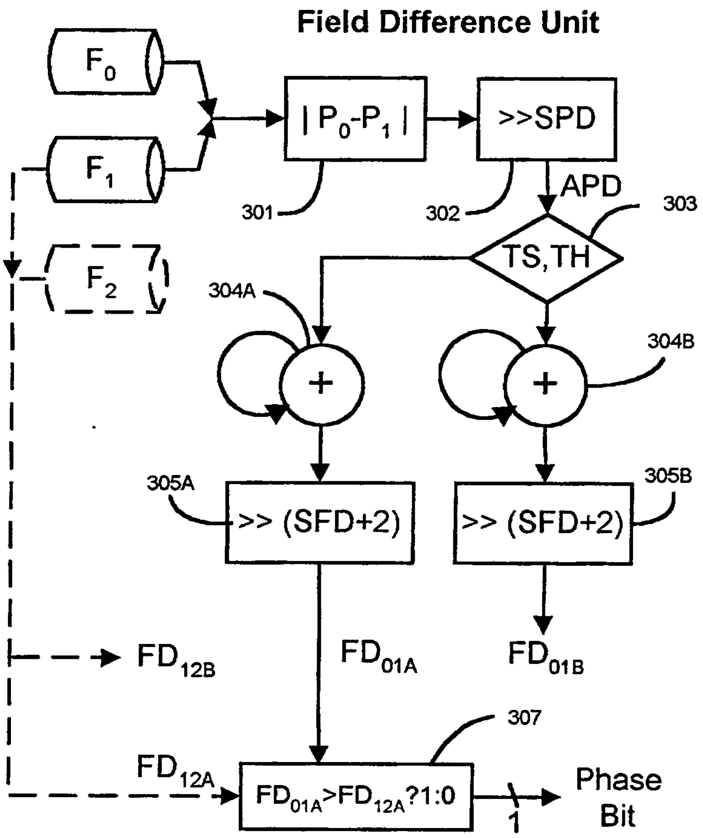
Field Difference Unit
F0
F1
F2
| P0-P1 |
>>SPD
APD
TS,TH
+
+
>> (SFD+2)
>> (SFD+2)
FD12B
FD01A
FD01B
FD12A
FD01A>FD12A?1:0
1
Phase Bit
301
302
303
304A
304B
305A
305B
307

Fig. 4

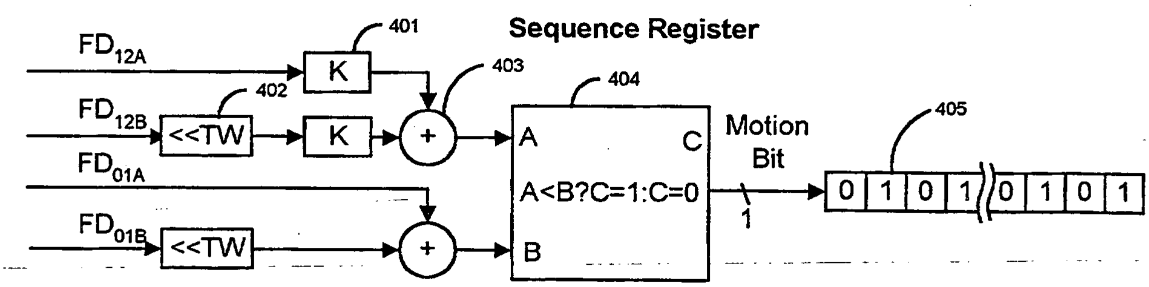
Sequence Register
FD12A
FD12B
FD01A
FD01B
K
<<TW
K
+
<<TW
+
A
C
A<B?C=1:C=0
B
Motion Bit
1
0 1 0 1 0 1 0 1
401
402
403
404
405

Fig. 5

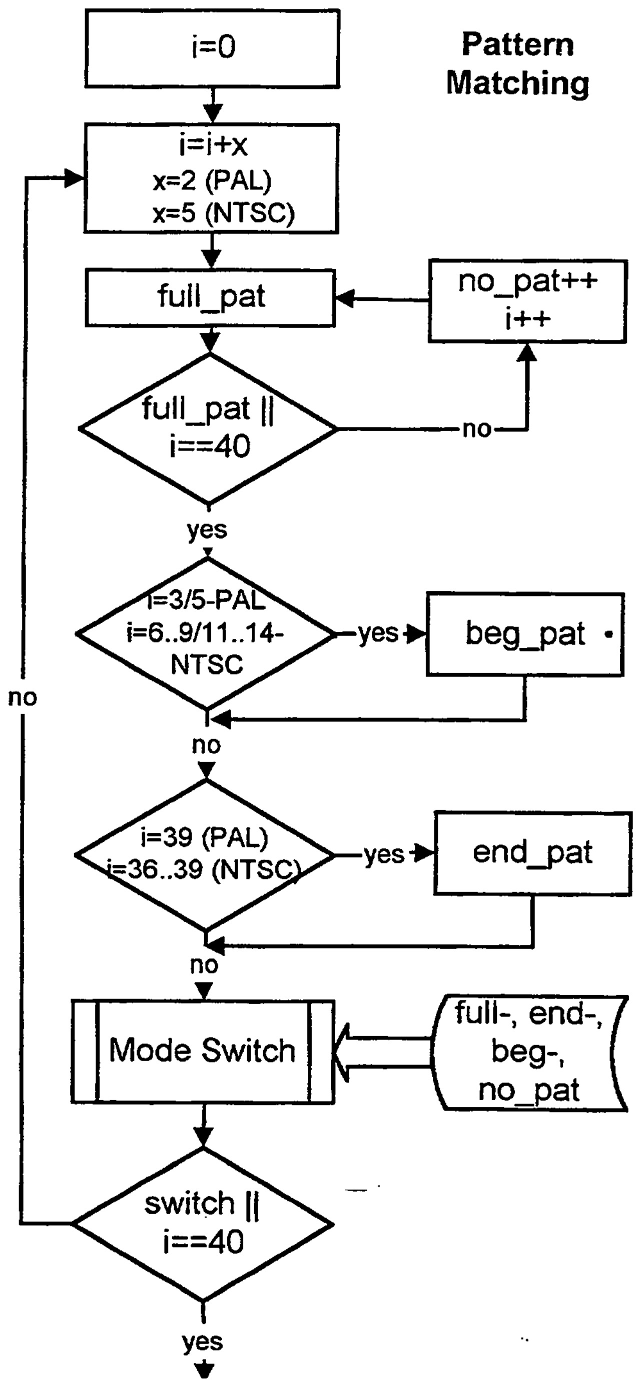
Pattern Matching
i=0
i=i+x
x=2 (PAL)
x=5 (NTSC)
full_pat
no_pat++
i++
full_pat ||
i==40
no
yes
i=3/5-PAL
i=6..9/11..14-
NTSC
yes
beg_pat
no
no
i=39 (PAL)
i=36..39 (NTSC)
yes
end_pat
no
Mode Switch
full-, end-,
beg-,
no_pat
switch ||
i==40
yes

Fig. 6

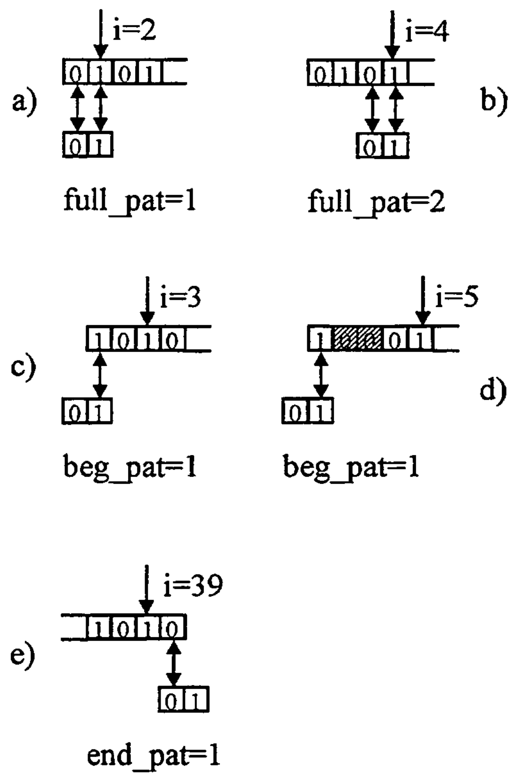
i=2
a)
full_pat=1
i=4
b)
full_pat=2
i=3
c)
beg_pat=1
i=5
d)
beg_pat=1
i=39
e)
end_pat=1

# Fig. 7

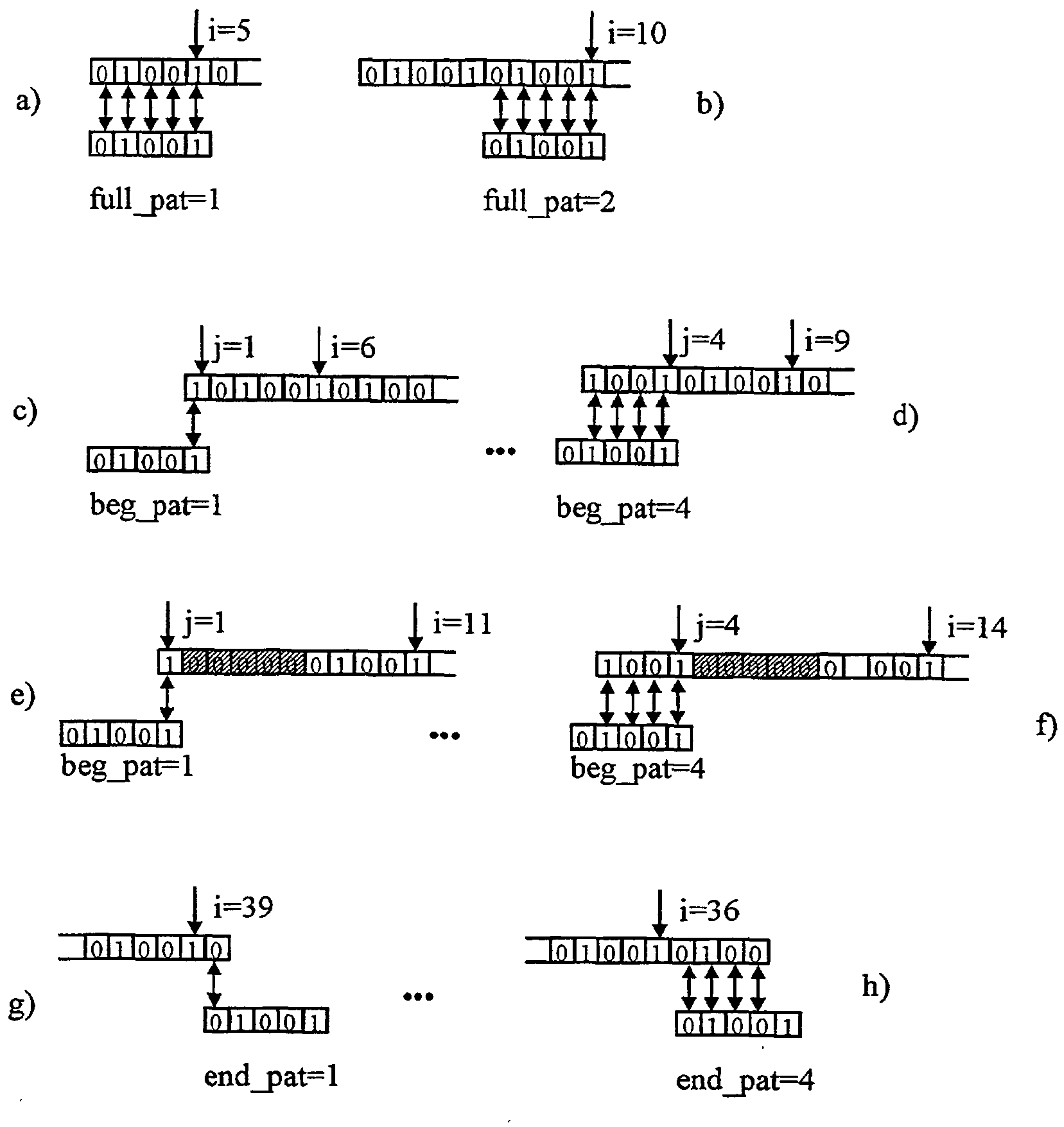

a)
i=5
full_pat=1
b)
i=10
full_pat=2
c)
j=1
i=6
beg_pat=1
d)
j=4
i=9
beg_pat=4
e)
j=1
i=11
beg_pat=1
f)
j=4
i=14
beg_pat=4
g)
i=39
end_pat=1
h)
i=36
end_pat=4

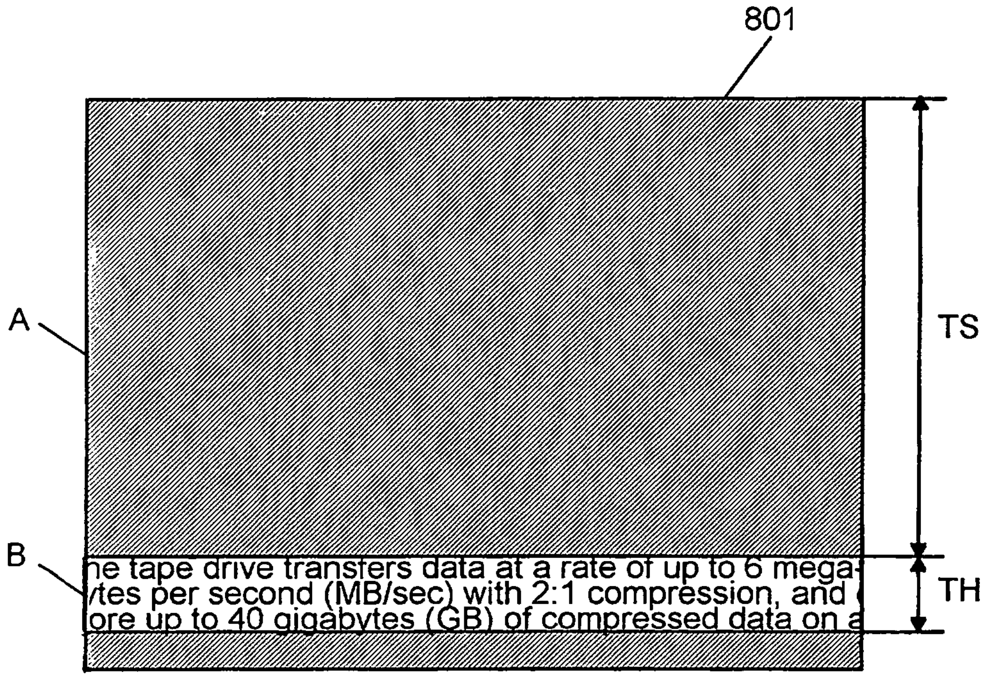
801
A
B
TS
TH
ne tape drive transfers data at a rate of up to 6 mega-
ytes per second (MB/sec) with 2:1 compression, and
ore up to 40 gigabytes (GB) of compressed data on a

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0720366 A2
- WO 9430006 A
- WO 0051355 A
- WO 0033579 A